# EUROPÄISCHE PATENTSCHRIFT

(11) **EP 1 519 059 B1**
(45) Veröffentlichungstag und Bekanntmachung des Hinweises auf die Patenterteilung: **26.11.2008**
(21) Anmeldenummer: 04017954.1
(22) Anmeldetag: 29.07.2004
(51) Int. Cl.: H02K 41/03, F16C 29/00, B61B 13/08, B23Q 1/56, B23Q 5/28

(54) **Schienenfahrzeug und Loslagerstelle**
Railway vehicle and floating bearing
Véhicule ferroviaire et palier libre

(30) Priorität: 26.09.2003 DE 10345068
(43) Veröffentlichungstag der Anmeldung: 30.03.2005
(73) Patentinhaber: Sew-Eurodrive GmbH & Co. KG, 76646 Bruchsal (DE)
(72) Erfinder: Dittes, Gerhard, 75053 Gondelsheim (DE)

(56) Entgegenhaltungen:
- DE-A1- 10 256 761
- DE-A1- 19 604 642
- DE-A1- 19 815 474
- DE-A1- 19 842 384
- GB-A- 1 095 391

## Beschreibung

Die Erfindung betrifft ein Schienenfahrzeug und eine Loslagerstelle.

GB 1 095 391 offenbart ein Loslager nach dem Oberbegriff des Anspruchs 1.

Als Schienenfahrzeuge ausgeführte Linearmotoren sind bekannt, wobei Linearmotoren als Asynchron-, Synchron-, Reluktanzmotoren oder dergleichen ausführbar sind.

Aus der Figur 5 der US 4 264 112 ist ein Loslager bekannt, das in X-Richtung bei Krafteinwirkung nachteiligerweise Spiel aufweist. Das Loslager nach Figur 5 ist zur Kompensation einer Längenausdehnung in Y-Richtung vorgesehen. Das Führungsleiste 52 ist mit der Platte 2 fest verschraubt. Der die Schienen 5 umfassende Block 50 weist eine Nut zur Aufnahme der Führungsleiste 52 auf, wobei Kraft in X-Richtung übertragbar ist. In Y-Richtung ist die Platte 2 mit der Führungsleiste 52 relativ beweglich zum Block 52.

Bei Auftreten einer abstoßenden Kraft zwischen Platte 2 und Führungsleiste 52 ist der Kraftfluss von der Platte 2 über die Schraube 53 und dann über die Führungsleiste 52 zum Block 50 hin gerichtet, wobei die Kraft übertragende Fläche an der Führungsleiste 52 auf der der Platte 2 zugewandten Seite liegt. Bei Auftreten einer anziehenden Kraft zwischen Platte 2 und Führungsleiste 52 ist der Kraftfluss von der Platte 2 über die Führungsleiste 52 zum Block 50 hin gerichtet, wobei die Kraft übertragende Fläche an der Führungsleiste 52 auf der gegenüberliegenden Seite liegt. Die Berührfläche, also die Führungsfläche, zwischen Block 52 und Führungsleiste 52 ist in beiden Fällen nachteiligerweise sehr klein. Somit tritt nachteiligerweise eine hohe Flächenpressung auf, die einen hohen Abrieb zur Folge hat. Bei Auftreten der genannten abstoßenden oder anziehenden Kräfte geht der Kraftfluss stets durch die Führungsleiste 52 hindurch, das somit auch entsprechend stabil ausgeführt sein muss und daher eine hohe Masse hat.

Weiter nachteilig ist auch, dass zur Bildung der Nut für die Führungsleiste 52 der Block 50 aus Vollmaterial sein muss, wodurch die Masse erhöht ist.

Außerdem ist die Platte 2 zusammen mit der Führungsleiste 52 nicht einteilig aus Strangguss fertigbar und daher aufwendig und kostspielig.

Der Erfindung liegt daher die Aufgabe zugrunde, ein Schienenfahrzeug und eine Loslagerstelle derart weiterzubilden, dass der Verschleiß bei industriellen Anwendungen in kostengünstiger Weise verbessert ist.

Erfindungsgemäß wird die Aufgabe bei dem Loslager nach den in Anspruch 1 und bei dem Schienenfahrzeug nach den in Anspruch 7 angegebenen Merkmalen gelöst.

Wesentliche Merkmale der Erfindung bei der Loslagerstelle sind, dass sie zum Lagern eines ersten Teils, insbesondere ein Gehäuse, auf ein drittes Teil, insbesondere ein Führungswagen, insbesondere mit einem Freiheitsgrad, derart gestaltet ist, dass das dritte Teil mit einem zweiten Teil, insbesondere ein Nutenstein, lösbar und/oder fest verbunden ist, wobei das erste und dritte Teil eine gegenseitige Berührfläche aufweisen
wobei das erste Teil mittels des zweiten Teils auf das dritte Teil gepresst ist,
wobei bei entsprechender Krafteinwirkung das erste Teil in einer ersten Richtung relativ zum dritten Teil verschiebbar angeordnet ist,
wobei eine zur ersten Richtung senkrecht gerichtete Kraft spielarm übertragbar ist vom ersten zum dritten Teil.

Von Vorteil ist dabei, dass eine Längenänderung, insbesondere eine thermisch bewirkte, kompensierbar ist und somit der Verschleiß bei Schienenfahrzeugen mittels Verwendung einer erfindungsgemäßen Loslagerstelle in kostengünstiger Weise kompensierbar ist. Außerdem ist es nun in einfacher Weise ermöglicht eine große Berührfläche, also Kontaktfläche, zwischen erstem und drittem Teil zu realisieren und somit den Abrieb bei solchen thermisch bedingten Bewegungen zu Verringern.

Von Vorteil ist bei der Erfindung des Weiteren, dass wegen der großen Berührfläche auch große Kräfte übertragbar sind und somit keine Gefahr für die Teile bei Überlastung auftritt.

Spielarme Übertragungen sind darüber hinaus bei Positionieranwendungen äußerst vorteilhaft.

Zur Verbesserung der Wärmeabfuhr ist die große Berührfläche zwischen erstem und drittem Teil vorteiligerweise verwendbar. Denn die magnetische Kraft, die im Betrieb zwischen Magneten und Spulenbaugruppen des Linearmotors wirkt, bewirkt zwischen erstem und drittem Teil Anziehung. Somit liegt Kontakt vor im Bereich der Berührfläche zwischen den beiden Teilen. Auf diese Weise ist das erste Teil zur Wärmeabfuhr geeignet und der linearmotor kann eine höhere Leistung zur Verfügung stellen. Weiter vorteilhaft ist bei der Erfindung, dass die Befestigungsschrauben für die Nutensteine in Ausnehmungen des Stranggusses, die als Kühlkanäle für ein Kühlmedium, beispielsweise ein Gas, Luft, Kühlflüssigkeit oder Wasser einsetzbar sind, hineinragen.

Bei einer vorteilhaften Ausgestaltung sind zweites und drittes Teil identisch, also aus einem Stück ausgeführt sind. Von Vorteil ist dabei, dass die Teileanzahl reduziert ist.

Bei der Erfindung ist das zweite Teil derart in einer Nut des ersten Teils vorgesehen, dass der Freiheitsgrad des Loslagers derart gerichtet ist, dass Bewegungen des ersten Teils entlang der Nut ausführbar sind, insbesondere thermisch bedingte Ausdehnungen in Richtung der Nut.

Bei der Erfindung sind erstes und drittes Teil jeweils aus verschiedenen Materialien gefertigt. Von Vorteil ist dabei, dass das erste Teil aus Aluminiumdruckguss und das dritte Teil aus Stahl oder Guss herstellbar sind.

Wesentliche Merkmale der Erfindung bei dem Schienenfahrzeug sind, dass das Schienenfahrzeug auf mindestens zwei, zueinander parallel angeordneten Schienen bewegbar angeordnet ist, wobei das Schienenfahrzeug mindestens einen Führungswagen für jede Schiene umfasst, wobei das Schienenfahrzeug zu einem ersten der einer ersten Schiene zugeordneten Führungswagen mindestens ein Festlager aufweist und das Schienenfahrzeug zu einem ersten der einer zweiten Schiene zugeordneten Führungswägen mindestens ein Loslager aufweist. Von Vorteil ist dabei, dass Längenausdehnungen kompensierbar sind und somit die Belastungen, insbesondere Querbelastungen verringerbar sind.

Bei einer vorteilhaften Ausgestaltung ist zur Erfassung der Position und/oder Geschwindigkeit ein Messsystem vom Schienenfahrzeug umfasst, das näher am Festlager als am Loslager angeordnet ist. Von Vorteil ist dabei, dass die Störungen des Messsystems verringerbar sind , insbesondere die durch thermisch oder sonstig bedingte Längenausdehnungen verursachten Messfehler.

Bei einer vorteilhaften Ausgestaltung ist das Schienenfahrzeug ein Linearmotor. Von Vorteil ist dabei, dass das Schienenfahrzeug nicht passiv ist sondern einen Antrieb umfasst.

Bei einer vorteilhaften Ausgestaltung ist der Linearmotor als Synchronmotor ausgeführt. Von Vorteil ist dabei, dass ein leistungsstarker hochdynamischer Positionierantrieb vorsehbar ist.

Bei einer vorteilhaften Ausgestaltung umfasst das erste Teil Spulen des Linearmotors. Von Vorteil ist dabei, dass im beweglichen Teil Spulen sind, wobei die mittels Erwärmung entstehenden Längenausdehnungen kompensierbar sind.

Bei einer vorteilhaften Ausgestaltung umfasst das Schienenfahrzeug Mittel derart, dass die Spulen berührungslos mit Energie versorgbar sind. Von Vorteil ist dabei, dass keine verschleißbehaftete Energiezufuhr notwendig ist, wie beispielsweise Schleifleitungen mit Schleifleitungskontakten.

Bei einer vorteilhaften Ausgestaltung umfasst das erste Teil eine Kühlvorrichtung, wie Kühlrippen oder Kühlfinger. Von Vorteil ist dabei, dass eine leistungsfähige Kühlung vorgesehen ist.

Bei einer vorteilhaften Ausgestaltung umfasst das dritte Teil eine Schnittstelle zum Verbinden mit weiteren Vorrichtungen. Von Vorteil ist dabei, dass die Kühlvorrichtung zwischen anzuschließender Vorrichtung und Spulen des Linearmotors angeordnet ist, wobei der Luftstrom zum Abtransport der Wärme zwischen Gehäuse und anzuschließender Vorrichtung durchströmen kann.

Bei einer vorteilhaften Ausgestaltung umfasst die Schnittstelle regelmäßig voneinander beabstandete Bohrungen. Von Vorteil ist dabei, dass verschiedene Vorrichtungen mittels der Schnittstelle anschließbar und verbindbar sind, wobei auf diese Weise nicht für jede anzuschließende Vorrichtung ein spezielles Schienenfahrzeug herzustellen ist.

Bei einer vorteilhaften Ausgestaltung ist das Gehäuse ein Stranggussteil. Von Vorteil ist dabei, dass es besonders kostengünstig fertigbar ist. Insbesondere sind auch Ausnehmungen in Stranggussrichtung kostengünstig fertigbar. Da das erfindungsgemäße Loslager vorteiligerweise um die Verbindungsschraube herum kein Vollmaterial benötigt, kann die Verbindungsschraube sogar in eine solche Ausnehmung hinein ragen und somit das Schienenfahrzeug mit geringer Masse ausgeführt werden. Außerdem ist somit durch diese Ausnehmungen Luft zur Kühlung des Gehäuses hindurchleitbar, die entweder aktiv von einem Lüfter oder passiv durch den Fahrtenwind angetrieben ist. Auf diese Weise ist die von den Spulenbaugruppen des beweglichen Teils erzeugte Wärme schnell und einfach ableitbar.

Bei einer vorteilhaften Ausgestaltung ragen die Verbindungsschrauben in eine Ausnehmung des Gehäuses hinein, die beim Herstellen mittels Stranggussverfahren erzeugbar ist. Von Vorteil ist dabei, dass die kein Vollmaterial um die Nutensteine und die Verbindungsschrauben notwendig ist und somit die Kühlung verbesserbar ist. Außerdem ist die Masse verringerbar.

Weitere Vorteile ergeben sich aus den Unteransprüchen.

Die Erfindung wird nun anhand von Abbildungen näher erläutert:

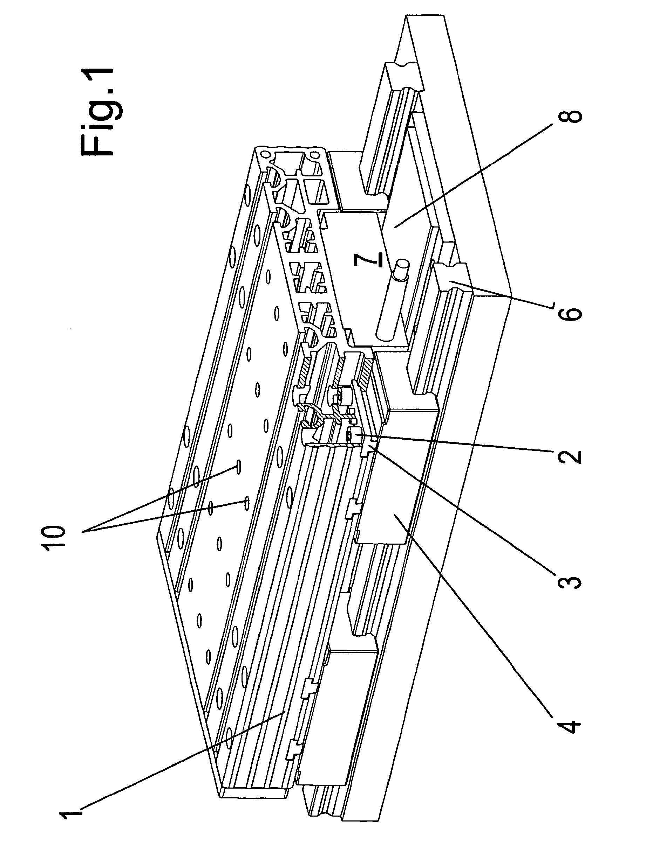

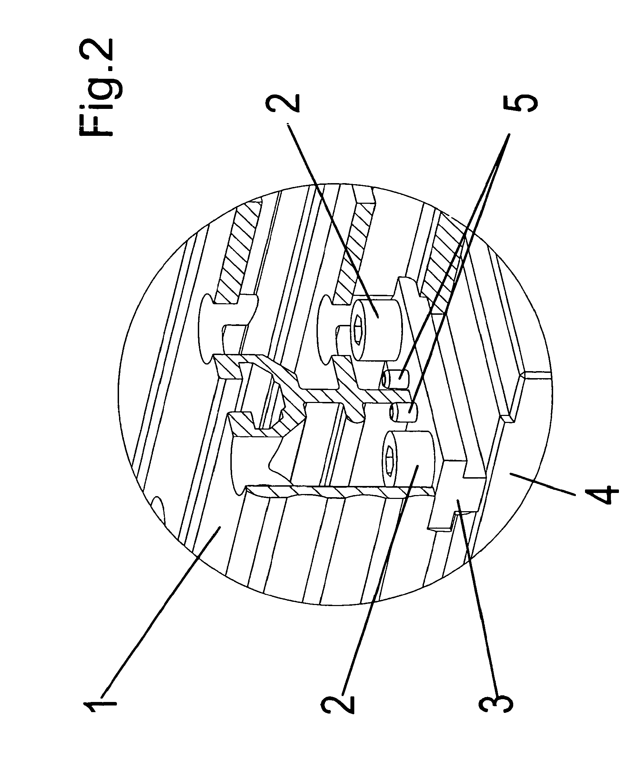

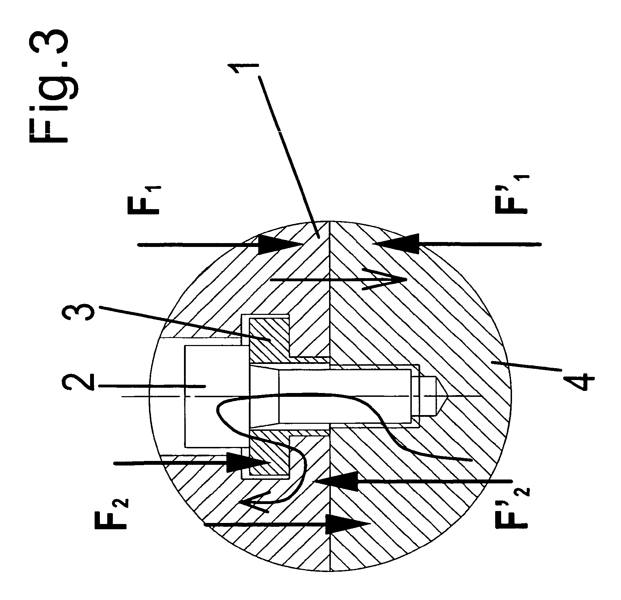

In der Figur 1 ist ein erfindungsgemäßer Linearmotor gezeigt, der im beweglichen Teil ein Gehäuse 1 aus Strangguss umfasst, das über mindestens eine erfindungsgemäße Lagerstelle mit Führungswagen 4 verbunden ist. Dabei ist ein Teil des Gehäuses 1 herausgeschnitten, so dass der Nutenstein 3 besser sichtbar ist. In der Figur 2 ist der durch den Herausschnitt sichtbare Teil vergrößert dargestellt. In Figur 3 ist hierzu ein symbolischer Schnitt gezeigt, mit dem die Kraftflüsse leichter verständlich gemacht werden.

Der Linearmotor ist auf zwei voneinander beabstandeten Schienen 6 beweglich, wobei die Führungswagen 4 mit Kugelumlauflager oder Gleitlager ausführbar sind.

Das Gehäuse 1 umgibt die Spulenwicklungen 7 des Linearmotors. Je nach eingebrachter elektrischer Leistung erwärmen sich die Spulen und führen somit auch zu entsprechend lokalen Erwärmungen des Gehäuses 1. Dadurch bedingt finden entsprechende Längenausdehnungen und entsprechende Verformungen am Gehäuse statt. Zum Kompensieren dieser Verformungen ist das Gehäuse an einer ersten Seite mittels Loslager an den der ersten Schiene zugeordneten Führungswagen 4 gelagert und an einer zweiten Seite mittels Festlager an den der zweiten Schiene zugeordneten Führungswagen gelagert.

Auf diese Weise wird die Längenausdehnung an der Loslagerseite derart kompensiert, dass keine unzulässig hohen Kräfte auf die Führungswagen 4 wirken. Des Weiteren ist nun an der Festlagerseite ein Messsystem zur Erfassung der linearen Position und/oder Geschwindigkeit anbringbar, wobei thermisch bedingte Störungen des Messsystems stark verringerbar sind. Insbesondere ist das Messsystem auf der Außenseite angebracht und somit möglichst weit entfernt von den Gebieten der thermischen Erwärmung.

Das Reaktivteil, insbesondere Sekundärteil des Linearmotors, ist direkt oder bei anderen erfindungsgemäßen Ausführungsbeispielen indirekt mit den als Führungsschienen ausgeführten Schienen 6 verbunden. Zwischen den Schienen sind die Magnete des Linearmotors auf die Grundplatte des Reaktivteils aufgeklebt und mit einer zum Reaktivteil zählenden Abdeckplatte 8 versehen.

Das Gehäuse 1 ist mit Kühlrippen als Kühlvorrichtung versehen. Das Gehäuse weist außerdem eine standardisierte Schnittstelle für das Anschließen weiterer Vorrichtungen auf.

Dazu sind regelmäßig voneinander beabstandete Nutenfelder vorgesehen. Die in der Zeichnungen gezeigten Bohrungen 10 sind zur Befestigung der Spulenbaugruppen mit den Spulenwicklungen 7 vorgesehen.

Die genannten Längenausdehnungen können unter Umständen auch weitere oder andere Ursachen haben, wie mechanische Spannungen, die von einer an das Gehäuse 1 angeschlossenen weiteren Vorrichtung verursacht sind. Weitere Ursachen sind auch fertigungsbedingte Toleranzen.

Die Montagerichtung des Linearmotors ist nicht festgelegt. Beispielsweise ist die Montage derart ausführbar, dass die Gravitationsrichtung vom Gehäuse 1 zu den Magneten und deren Abdeckplatte 8 gerichtet ist oder umgekehrt.

Die Lagerung mittels Loslagerstellen ist in Figur 2 schematisch deutlicher gezeigt. In der Figur 3 ist ein symbolischer entsprechender Schnitt, der die technische Funktionsweise veranschaulicht.

Das Gehäuse 1 weist mehrere Nuten auf, die senkrecht zur Strangguss-Richtung orientiert sind. In der Figur 2 ist das Gehäuse in diesem Bereich herausgeschnitten. Die Richtung dieser Nuten definiert die Richtung des Freiheitsgrades des Loslagers.

In den Nuten ist jeweils ein Nutenstein 3 vorgesehen, der mit dem Führungswagen 4 fest verbunden ist. In weiteren erfindungsgemäßen Ausführungsbeispielen ist der Führungswagen auch einstückig mit dem Nutenstein 3 oder einer entsprechenden, funktional gleichwertigen Ausformung ausführbar. Statt des Nutensteines 3 zusammen mit der Nut sind auch alle anderen mechanischen linearen Führungsarten verwendbar.

Jeder Nutenstein 3 ist mittels einer Verbindungsschraube 2 mit dem Führungswagen 4 fest verbunden. Die Nut für den Nutenstein 3 im Gehäuse 1 ist derart bemessen, dass das Gehäuse 1 zwischen Führungswagen 4 und Nutenstein 3 geführt ist.

Bei Auftreten einer zwischen Gehäuse 1 und Führungswagen 4 zusätzlich anziehend wirkenden Kraft, die beispielsweise durch die obengenannten weiteren Vorrichtungen bewirkt wird, wird diese Kraft von der großen Kontaktfläche des Gehäuses 1 direkt an die Kontaktfläche des Führungswagens übertragen. Somit ist die Presskraft gering und der Abrieb ebenfalls gering. In Figur 3 ist der zugehörige Kraftfluss mit F1 gekennzeichnet.

Bei Auftreten einer zwischen Gehäuse 1 und Führungswagen 4 zusätzlich abstoßend wirkenden Kraft, wird diese Kraft vom Gehäuse 1 über den Nutenstein 3 an den Schraubenkopf der Verbindungsschraube 2 übertragen und von dort über das Gewinde der Verbindungsschraube 2 an den Führungswagen 4. In Figur 3 ist der zugehörige Kraftfluss mit F2 gekennzeichnet.

Vorteiligerweise muss das Gehäuse 1 kein Vollmaterial um den Nutenstein 3 herum aufweisen. Es genügt so viel Material wie zur Bildung der Kontaktfläche zum Nutenstein 3 und zum Führungswagen 4 hin notwendig ist. Über der Verbindungsschraube 2 ist Freiraum, der als Bohrung ausführbar ist, um einen Zugang eines Werkzeuges zur Verbindungsschraube zu ermöglichen. Außerdem sind auch weitere Ausnehmungen entlang der Bewegungsrichtung, also in Richtung des Stranggusses, ausbildbar, die als Kühlkanäle für ein Kühlmedium, beispielsweise ein Gas, Luft, Kühlflüssigkeit oder Wasser einsetzbar sind. Durch diese Ausnehmungen wird zusätzlich die Masse erniedrigt, ohne dass die Stabilität verringert wird oder wesentlich verringert wird. Diese Ausnehmungen werden beim Herstellen des Stranggusses erzeugt. Somit fallen keine zusätzlichen Kosten oder Aufwand für deren Fertigung an.

Wesentlich ist bei der Erfindung auch, dass das Gehäuse 1 mittels des Nutensteins 3 an den Führungswagen 4 angepresst wird. Somit ist der Führungswagen 4 mit dem Gehäuse 1 spielarm, also mit einem kleinen Spiel, verbunden. Dies ist bei Positionierantrieben von wesentlicher und vorteiliger Bedeutung. Bei geeignet ausgeführter Montage der Nutensteine mit Führungswagen ist es ermöglicht, dass das Spiel auf fast Null reduziert wird, indem die Nutensteine etwas angestellt montiert werden.

Somit ist das Gehäuse 1 spielarm verbunden mit dem Führungswagen 4 und es ist eine thermisch oder anderweitig bedingte Längenausdehnung in Richtung der Nut kompensierbar.

Mittels der Materialwahl ist die Reibung in weiten Grenzen wählbar, die bei der Verschiebung auftritt. Beispielsweise ist das Gehäuse 1 aus Aluminium ausgeführt, da die Kühlrippen eine hochkomplexe Oberfläche darstellen. Der Führungswagen 4 und der Nutenstein 3 hingegen sind aus Stahl oder Guss kostengünstig und mechanisch stabil herstellbar. Ebenso sind auch Verbindungsschrauben 2 aus Stahl vorsehbar.

Statt eines Linearmotors ist die Erfindung auch bei allen Schienenfahrzeugen verwendbar, die mindestens zwei Schienen und ein über Führungswagen oder Räder gelagerten fahrbares Teil umfassen. Die von den Loslagerstellen zu kompensierenden Längenausdehnungen müssen dabei nicht unbedingt nur thermisch bedingt sein, sondern können auch andere Ursachen aufweisen.

Die Loslagerstelle ist auch bei anderen Vorrichtungen verwendbar, bei welchen eine Ausdehnung in einer Richtung zu kompensieren ist. Insbesondere die Verwendung einer Nut und einem darin vorgesehenen Nutenstein 3 gemäß Figur 3 ist auch bei anderen Vorrichtungen vorteilhaft verwendbar. Dabei ist die Anzahl der Loslagerstellen veränderbar sowie auch die Anzahl der Loslagerstellen mit Nutensteinen. Statt des Nutensteins 3 sind auch entsprechend geformte andere Teile verwendbar.

Bei weiteren erfindungsgemäßen Ausführungsbeispielen sind die Spulenwicklungen separat vom Gehäuse 1 angeordnet.

In Figur 2 sind Stifte zur Fixierung der Nutensteine 3 deutlich zu sehen, wobei diese Stifte bei Montage in die Nutensteine 3 geschlagen werden und dann ein Herausfallen der Nutensteine 3 aus dem Gehäuse 1 verhindern.

Spielarm bedeutet vorteiligerweise ein lineares Spiel von weniger als 20 µm.

## Patentansprüche

1. Loslager zum Lagern eines ersten Teils auf ein drittes Teil, insbesondere mit einem Freiheitsgrad,
wobei das dritte Teil mit einem zweiten Teil verbunden ist, wobei
das erste und dritte Teil eine gegenseitige Berührfläche aufweisen
wobei das erste Teil mittels des zweiten Teils auf das dritte Teil gepresst ist,
wobei bei entsprechender Krafteinwirkung das erste Teil in einer ersten Richtung relativ zum dritten Teil verschiebbar angeordnet ist,
wobei eine zur ersten Richtung senkrecht gerichtete Kraft spielarm übertragbar ist vom ersten zum dritten Teil,
**dadurch gekennzeichnet, dass**
das zweite Teil derart in einer Nut des ersten Teils vorgesehen ist, dass der Freiheitsgrad des Loslagers derart gerichtet ist, dass Bewegungen des ersten Teils entlang der Nut ausführbar sind, insbesondere thermisch bedingte Ausdehnungen In Richtung der Nut,
wobei erstes und drittes Teil jeweils aus verschiedenen Materialien gefertigt sind.

2. Loslager nach Anspruch 1,
**dadurch gekennzeichnet, dass** drittes
und zweites Teil identisch sind, also aus einem Stück ausgeführt sind.

3. Loslager nach mindestens einem der vorangegangenen Ansprüche,
**dadurch gekennzeichnet, dass**
das zweite Teil mittels einer Verbindungsschraube (2) mit dem dritten Teil lösbar verbunden ist.

4. Loslager nach mindestens einem der vorangegangenen Ansprüche,
**dadurch gekennzeichnet, dass**
das erste, zweite und/oder dritte Teil aus mindestens zwei fest verbundenen Teilen aufgebaut ist.

5. Loslager nach mindestens einem der vorangegangenen Ansprüche,
**dadurch gekennzeichnet, dass**
das erste Teil ein Gehäuse (1) ist, das zweite Teil ein Nutenstein (3) und/oder das dritte Teil ein Führungswager (4).

6. Loslager nach mindestens einem der vorangegangenen Ansprüche,
**dadurch gekenntzeichnet, dass**
Stifte (5) zur Fixierung der in jeweilige Nuten des Gehäuses (1) eingeführten Nutensteine (3) bei Montage einbringbar sind.

7. Schienenfahrzeug, das auf mindestens zwei, zueinander parallel angeordneten Schienen (6) bewegbar angeordnet ist,
wobei das Schienenfahrzeug mindestens einen Führungswagen (4) für jede Schiene (6) umfasst,
das Schienenfahrzeug zu einem ersten der einer ersten Schiene (6) zugeordneten Führungswagen (4) mindestens ein Festlager aufweist und
das Schierienfahrzeug zu einem ersten der einer zweiten Schiene (6) zugeordneten Führungswägen mindestens ein Loslager nach mindestens einem der vorangegangenen Ansprüche aufweist.

8. Schienenfahrzeug nach Anspruch 7,
**dadurch gekennzeichnet, dass**
das Gehäuse (1) ein Stranggussteil ist.

9. Schienenfahrzeug nach einem der Ansprüche 7 bis 8,
**dadurch gekennzeichnet, dass**
die Verbindungsschrauben (2) in eine Ausnehmung zur Wärmeabfuhr des Gehäuses (1) hineinragen, die beim Herstellen mittels Stranggussverfahren erzeugt ist.

10. Schienenfahrzeug nach einem der Ansprüche 7 bis 9,
**dadurch gekennzeichnet, dass**
die Berührfläche zwischen Gehäuse (1) und Führungswagen (4) derart ausgeführt ist, dass Wärme vom Gehäuse (1) an den Führungswagen (4) abführbar ist.

11. Schienenfahrzeug nach einem der Ansprüche 7 bis 10,
**dadurch gekennzeichnet, dass**
zur Erfassung der Position und/oder Geschwindigkeit ein Messsystem vom Schienenfahrzeug umfasst ist, das näher am Festlager als am Loslager angeordnet ist.

12. Schienenfahrzeug nach einem der Ansprüche 7 bis 11,
**dadurch gekennzeichnet, dass**
das Schienenfahrzeug ein Linearmotor ist.

13. Schienenfahrzeug nach einem der Ansprüche 7 bis 12,
**dadurch gekennzeichnet, dass**
der Linearmotor als Synchronmotor ausgeführt ist.

14. Schienenfahrzeug nach einem der Ansprüche 7 bis 13,
**dadurch gekennzeichnet, dass**
das dritte Teil Spulen des Linearmotors umfasst.

15. Schienenfahrzeug nach einem der Ansprüche 7 bis 14,
**dadurch gekennzeichnet, dass**
das Schienenfahrzeug Mittel derart umfasst, dass die Spulen berührungslos mit Energie versorgbar sind.

16. Schienenfahrzeug nach einem der Ansprüche 7 bis 15,
**dadurch gekennzeichnet, dass**
das dritte Teil eine Kühlvorrichtung, wie Kühlrippen oder Kühlfinger, umfasst.

17. Schienenfahrzeug nach einem der Ansprüche 7 bis 16,
**dadurch gekennzeichnet, dass**
das dritte Teil eine Schnittstelle zum Verbinden mit weiteren Vorrichtungen umfasst.

18. Schienenfahrzeug nach einem der Ansprüche 7 bis 17,
**dadurch gekennzeichnet, dass**
die Schnittstelle regelmäßig voneinander beabstandete Bohrungen umfasst.

## Claims

1. A floating bearing for mounting a first part on a third part, in particular with a degree of freedom, wherein the third part is connected to a second part, wherein the first part and the third part have a mutual contact face, wherein the first part is pressed onto the third part by means of the second part, wherein with a suitable application of force the first part is arranged so as to be displaceable in a first direction relative to the third part, wherein a force directed at a right angle to the first direction is capable of being transmitted with a low degree of play from the first part to the third part, **characterized in that** the second part is provided in a groove in the first part in such a way that the degree of freedom of the floating bearing is directed in such a way that it is possible for movements of the first part to be carried out along the groove, in particular thermally caused expansion in the direction of the groove, and wherein the first part and the third part are produced from different materials in each case.

2. A floating bearing according to Claim 1, **characterized in that** the third part and the second part are identical, i.e. they are produced from one piece.

3. A floating bearing according to at least one of the preceding Claims, **characterized in that** the second part is connected to the third part in a releasable manner by means of a connecting screw (2).

4. A floating bearing according to at least one of the preceding Claims, **characterized in that** the first, second and/or third part is or are formed from at least two parts connected in a fixed manner.

5. A floating bearing according to at least one of the preceding Claims, **characterized in that** the first part is a housing (1), the second part is a slide block (3) and/or the third part is a guiding carriage (4).

6. A floating bearing according to at least one of the preceding Claims, **characterized in that** pins (5) are capable of being introduced during assembly in order to fix the slide blocks (3) inserted into the respective grooves in the housing (1).

7. A rail vehicle which is arranged so as to be movable on at least two rails (6) arranged parallel to each other, wherein the rail vehicle comprises at least one guiding carriage (4) for each rail (6), the rail vehicle has at least one fixed bearing for a first one of the guiding carriages (4) associated with a first rail (6), and the rail vehicle has at least one floating bearing according to at least one of the preceding Claims for a first one of the guiding carriages associated with a second rail (6).

8. A rail vehicle according to Claim 7, **characterized in that** the housing (1) is a part formed by continuous casting.

9. A rail vehicle according to one of Claims 7 to 8, **characterized in that** the connecting screws (2) project into a recess for the removal of heat from the housing (1), which recess is formed by means of continuous-casting methods during production.

10. A rail vehicle according to any one of Claims 7 to 9, **characterized in that** the contact face between the housing (1) and the guiding carriage (4) is designed in such a way that heat from the housing (1) is capable of being removed to the guiding carriage (4).

11. A rail vehicle according to any one of Claims 7 to 10, **characterized in that**, in order to detect the position and/or the speed, a measurement system is associated with the rail vehicle which is arranged closer to the fixed bearing than to the floating bearing.

12. A rail vehicle according to any one of Claims 7 to 11, **characterized in that** the rail vehicle is a linear motor.

13. A rail vehicle according to any one of Claims 7 to 12, **characterized in that** the linear motor is constructed in the form of a synchronous motor.

14. A rail vehicle according to any one of Claims 7 to 13, **characterized in that** the third part comprises coils of the linear motor.

15. A rail vehicle according to any one of Claims 7 to 14, **characterized in that** the rail vehicle comprises means of such a type that the coils are capable of being supplied with energy without contact.

16. A rail vehicle according to any one of Claims 7 to 15, **characterized in that** the third part comprises a cooling apparatus, such as cooling ribs or cooling fingers.

17. A rail vehicle according to any one of Claims 7 to 16, **characterized in that** the third part comprises an interface for connecting to further apparatus.

18. A rail vehicle according to any one of Claims 7 to 17, **characterized in that** the interface comprises bores arranged at a regular distance from one another.

## Revendications

1. Palier libre
destiné à monter une première partie sur une troisième partie, notamment avec un degré de latitude,
sachant que la troisième partie est reliée à une deuxième partie,
sachant que les première et troisième parties présentent une surface de contact réciproque,
sachant que la première partie est pressée sur la troisième partie au moyen de la deuxième partie,
sachant que, moyennant une induction de force correspondante, la première partie est agencée à translation dans une première direction, vis-à-vis de la troisième partie,
sachant qu'une force, orientée perpendiculairement à la première direction, peut être transmise de la première à la troisième partie, avec faible jeu,
**caractérisé par le fait que**
la deuxième partie est prévue dans une rainure de la première partie, de façon telle que le degré de latitude du palier libre soit orienté de telle manière que la première partie puisse exécuter des mouvements le long de la rainure, en particulier des allongements d'origine thermique dans la direction de ladite rainure,
sachant que les première et troisième parties sont respectivement fabriquées en des matériaux différents.

2. Palier libre selon la revendication 1,
**caractérisé par le fait que**
les troisième et deuxième parties sont identiques, c'est-à-dire réalisées d'une seule pièce.

3. Palier libre selon au moins l'une des revendications précédentes,
**caractérisé par le fait que**
la deuxième partie est reliée amoviblement à la troisième partie, au moyen d'une vis de solidarisation (2).

4. Palier libre selon au moins l'une des revendications précédentes,
**caractérisé par le fait que**
les première, deuxième et/ou troisième partie(s) se compose(nt) d'au moins deux pièces reliées rigidement l'une à l'autre.

5. Palier libre selon au moins l'une des revendications précédentes,
**caractérisé par le fait que**
la première partie est un carter (1), la deuxième partie est un coulisseau (3) et/ou la troisième partie est un chariot de guidage (4).

6. Palier libre selon au moins l'une des revendications précédentes,
**caractérisé par le fait que**
des tétons (5) peuvent être intégrés, au stade du montage, en vue de la consignation à demeure des coulisseaux (3) insérés dans des rainures respectives du carter (1).

7. Véhicule ferroviaire monté mobile sur au moins deux rails (6) disposés parallèlement l'un à l'autre,
sachant que ledit véhicule ferroviaire comprend au moins un chariot de guidage (4) pour chaque rail (6),
que ledit véhicule ferroviaire présente au moins un palier fixe pour un premier chariot, parmi les chariots de guidage (4) associés à un premier rail (6), et
que ledit véhicule ferroviaire présente au moins un palier libre selon au moins l'une des revendications précédentes, pour un premier chariot, parmi les chariots de guidage associés à un second rail (6).

8. Véhicule ferroviaire selon la revendication 7,
**caractérisé par le fait que**
le carter (1) est une pièce venue d'extrusion.

9. Véhicule ferroviaire selon l'une des revendications 7 à 8,
**caractérisé par le fait que**
les vis de solidarisation (2) s'engagent dans un évidement affecté à la dissipation de chaleur du carter (1), et ménagé par extrusion au stade de la fabrication.

10. Véhicule ferroviaire selon l'une des revendications 7 à 9,
**caractérisé par le fait que**
la surface de contact, entre le carter (1) et le chariot de guidage (4), est réalisée de telle sorte que de la chaleur puisse être cédée audit chariot de guidage (4) par ledit carter (1).

11. Véhicule ferroviaire selon l'une des revendications 7 à 10,
**caractérisé par le fait que**
ledit véhicule ferroviaire englobe, pour détecter la position et/ou la vitesse, un système mesureur installé plus près du palier fixe que du palier libre.

12. Véhicule ferroviaire selon l'une des revendications 7 à 11,
**caractérisé par le fait que**
le véhicule ferroviaire est un moteur linéaire.

13. Véhicule ferroviaire selon l'une des revendications 7 à 12,
**caractérisé par le fait que**
le moteur linéaire est réalisé sous la forme d'un moteur synchrone.

14. Véhicule ferroviaire selon l'une des revendications 7 à 13,
**caractérisé par le fait que**
la troisième partie comprend des bobines du moteur linéaire.

15. Véhicule ferroviaire selon l'une des revendications 7 à 14,
**caractérisé par le fait que**
ledit véhicule ferroviaire renferme des moyens par lesquels les bobines peuvent être alimentées en énergie, sans contact.

16. Véhicule ferroviaire selon l'une des revendications 7 à 15,
**caractérisé par le fait que**
la troisième partie englobe un dispositif de refroidissement tel que des ailettes de refroidissement ou des ergots de refroidissement.

17. Véhicule ferroviaire selon l'une des revendications 7 à 16,
**caractérisé par le fait que**
la troisième partie englobe un interface en vue de la liaison avec d'autres dispositifs.

18. Véhicule ferroviaire selon l'une des revendications 7 à 17,
**caractérisé par le fait que**
l'interface présente des perçages régulièrement distants les uns des autres.
